# EUROPÄISCHE PATENTSCHRIFT

(11) **EP 2 049 825 B1**
(45) Veröffentlichungstag und Bekanntmachung des Hinweises auf die Patenterteilung: **18.08.2010**
(21) Anmeldenummer: 07730152.1
(22) Anmeldetag: 14.06.2007
(51) Int. Cl.: F16L 41/08

(54) **DICHTUNGSANORDNUNG FÜR EINE KUPPLUNG FÜR KÄLTEMITTELLEITUNGEN**
SEALING ARRANGEMENT FOR A COUPLING FOR REFRIGERANT LINES
DISPOSITIF D'ÉTANCHÉITÉ DESTINÉ À L'ACCOUPLEMENT DE CONDUITES DE FLUIDE FRIGORIGÈNE

(30) Priorität: 01.08.2006 DE 102006035717
(43) Veröffentlichungstag der Anmeldung: 22.04.2009
(73) Patentinhaber: ContiTech Kühner GmbH & Cie. KG, 71570 Oppenweiler (DE)
(72) Erfinder: WILDERMUTH, Andreas, 71672 Marbach (DE)
(74) Vertreter: Finger, Karsten
(86) Internationale Anmeldenummer: PCT/EP2007/055874
(87) Internationale Veröffentlichungsnummer: WO 2008/015053

(56) Entgegenhaltungen:
- FR-A1- 2 849 150
- US-A- 6 106 030
- US-A1- 2003 080 554
- US-B1- 6 386 593

## Beschreibung

Die Erfindung betrifft eine Dichtungsanordnung für eine Kupplung für Kältemittelleitungen aus einem dicht mit einem ersten Leitungsendstück verbundenen ersten Kupplungsstück und einem dicht mit einem zweiten Leitungsendstück verbundenen zweiten Kupplungsstück , wobei beide Kupplungsstücke durch Befestigungsmittel derart zusammengefügt sind, dass die Leitungsendstücke über je eine Bohrung in den Kupplungsstücken miteinander verbunden sind und die beiden Kupplungsstücke jeweils auf der zum anderen Kupplungsstück weisenden Seite eine radial verlaufende Dichtfläche aufweisen und als Befestigungsmittel nur eine einzige, seitlich von den Dichtflächen versetzt angeordnete Schraube vorgesehen ist, wobei im Abstand von der Schraube auf derjenigen Seite, die den Dichtflächen der Kupplungsstücke abgewandt ist, ein nicht komprimierbarer Formkörper als Abstandhalter zwischen den Kupplungsstücken angeordnet ist, der derart ausgebildet ist, dass beim Verschrauben der Kupplungsstücke eine Hebelwirkung entsteht, die zum gleichmäßigen Zusammenpressen eines zwischen den Dichtflächen der Kupplungsstücke angeordneten Dichtringes führt, bei der der Dichtring von einer als Kunststoffkappe mit Durchgangsbohrung ausgebildeten Haltevorrichtung an der Dichtfläche eines der beiden Kupplungsstücke gehalten wird und die Kunststoffkappe an einem ersten axialen Ende der Durchgangsbohrung radial in die Durchgangsbohrung hineinragende Haltenasen aufweist, durch die der Dichtring in seiner Position zwischen der Dichtfläche des Kupplungsstückes und den Haltenasen festlegbar ist.

Aus der EP 1 445 529 B1 ist eine derartige Dichtungsanordnung bekannt, bei der die Kunststoffkappe zwischen den Dichtflächen angeordnet ist und den Dichtring in Position hält, wobei die Kunststoffkappe und eins der Kupplungsstück derart ausgebildet sind, dass die Kunststoffkappe noch vor der Verschraubung der Kupplungsstücke einfach zwischen den Dichtflächen befestigt werden kann. Hierzu weist eins der Kupplungsstücke im äußeren Bereich der Dichtfläche einen radial umlaufenden nach außen gerichteten Vorsprung auf, auf dem die entsprechend ausgebildete Kunststoffkappe aufgeklipst ist.

Diese Kunststoffkappe muss bei der Demontage mit einem Werkzeug ausgehebelt werden. Dies birgt die Gefahr, dass die Dichtflächen des Kupplungsstückes zerkratzt werden. Die abgehebelte Kunststoffkappe darf nach der Demontage nicht mehr verwendet werden, ist aber von einer neuen Kappe nur äußerst schwer zu unterscheiden, so dass es zu Verwechslungen kommen kann.

Ein weiteren wesentlicher Stand der Technik ist durch FR 2849150 gegeben.

Der Erfindung liegt die Aufgabe zugrunde, eine Dichtungsanordnung der eingangs geschilderten Art zu schaffen, die eine einfachere und sicherere Handhabung der Dichtungsanordnung unter Vermeidung der genannten Nachteile ermöglicht.

Diese Aufgabe wird dadurch gelöst, dass die Kunststoffkappe mindestens eine Sollbruchstelle aufweist, die als die Materialstärke der Kunststoffkappe verringernde Nut derart ausgebildet ist, dass der Materialzusammenhalt in der Sollbruchstelle bei der Montage erhalten bleibt und bei der Demontage auseinander bricht.

Eine derartige Sollbruchstelle hat den Vorteil, dass die Kunststoffkappe auch ohne Werkzeug demontierbar ist, da die Sollbruchstelle bei der Demontage leicht auseinander bricht und daher nur ein geringer Kraftaufwand zur Demontage notwendig ist. Einer Beschädigung der Dichtfläche des Kupplungsstückes ist damit vorgebeugt. Außerdem kann die Kunststoffkappe nach der Demontage nicht wieder verwendet werden.

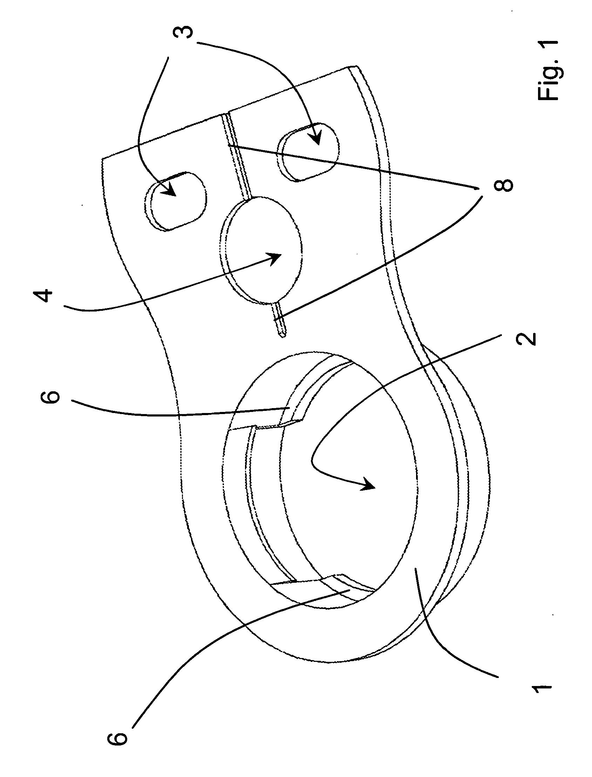

Anhand der Zeichnung wird nachstehend ein Beispiel der Erfindung näher erläutert.

Die in der Figur gezeigte Kunststoffkappe weist einen Korpus 1 aus einem elastischen Kunststoff mit einer Hauptbohrung 2 und drei Nebenbohrungen 3 und 4 auf. Die Nebenbohrungen 3 dienen als Positionierhilfe gegenüber hier nicht gezeigten Kupplungsstücken, die Nebenbohrung 4 dient als Durchgangsloch für eine ebenfalls nicht gezeigte Schraube, mit der die Kupplungsstücke zusammenschraubbar sind.

Die Kunststoffkappe weist in der Hauptbohrung 2 in radialer Richtung vorspringende Haltenasen 6 auf, die an einem ersten, in der Zeichnung unten liegenden axial Ende der Hauptbohrung 2 der Kunststoffkappe angeordnet sind. Der radiale Vorsprung der Haltenasen 6 ist so bemessen, dass ein in die Hauptbohrung 2 einlegbarer, nicht gezeigter Dichtring von den Haltenasen 6 am Hindurchfallen durch die Hauptbohrung 2 gehindert wird.

Der Korpus 1 der Kunststoffkappe weist außerdem zwei Sollbruchstellen 8 auf, die als die Materialstärke des Korpus 1 reduzierende, etwa V-förmige Nut ausgebildet sind. Diese Sollbruchstellen 8 zerbrechen bei der Demontage der Kunststoffkappe, so dass die Kunststoffkappe nicht noch einmal verwendbar ist. Der Dichtring fällt dabei aus der Kunststoffkappe heraus und ist ebenfalls nicht wieder verwendbar.

Die erfindungsgemäße Gestaltung der Kunststoffkappe ermöglicht somit eine vereinfachte und sicherere Handhabung der Dichtungsanordnung, vor allem bei der Demontage.

### Bezugszeichenliste

### (gehört zur Beschreibung)

- 1: Korpus
- 2: Hauptbohrung
- 3: Hilfsbohrung als Positionierhilfe
- 4: Hilfsbohrung als Durchgangsloch
- 6: Haltenasen
- 8: Sollbruchstellen

## Patentansprüche

1. Dichtungsanordnung für eine Kupplung für Kältemittelleitungen aus einem dicht mit einem ersten Leitungsendstück verbundenen ersten Kupplungsstück und einem dicht mit einem zweiten Leitungsendstück verbundenen zweiten Kupplungsstück, wobei beide Kupplungsstücke durch Befestigungsmittel derart zusammengefügt sind, dass die Leitungsendstücke über je eine Bohrung in den Kupplungsstücken miteinander verbunden sind und die beiden Kupplungsstücke jeweils auf der zum anderen Kupplungsstück weisenden Seite eine radial verlaufende Dichtfläche aufweisen und als Befestigungsmittel nur eine einzige, seitlich von den Dichtflächen versetzt angeordnete Schraube vorgesehen ist, wobei im Abstand von der Schraube auf derjenigen Seite, die den Dichtflächen der Kupplungsstücke abgewandt ist, ein nicht komprimierbarer Formkörper als Abstandhalter zwischen den Kupplungsstücken angeordnet ist, der derart ausgebildet ist, dass beim Verschrauben der Kupplungsstücke eine Hebelwirkung entsteht, die zum gleichmäßigen Zusammenpressen eines zwischen den Dichtflächen der Kupplungsstüeke angeordneten Dichtringes führt, bei der der Dichtring von einer als Kunststoffkappe mit Durchgangsbohrung ausgebildeten Haltevorrichtung an der Dichtfläche eines der beiden Kupplungsstücke gehalten wird und die Kunststoffkappe an einem ersten axialen Ende der Durchgangsbohrung (2) radial in die Durchgangsbohrung (2) hineinragende Haltenasen (6) aufweist, durch die der Dichtring in seiner Position zwischen der Dichtfläche des Kupplungsstückes und den Haltenasen (6) festlegbar ist,
**dadurch gekennzeichnet, dass** die Kunststoffkappe mindestens eine Sollbruchstelle (8) aufweist, die als die Materialstärke der Kunststoffkappe verringernde Nut derart ausgebildet ist, dass der Materialzusammenhalt in der Sollbruchstelle (8) bei der Montage erhalten bleibt und bei der Demontage auseinander bricht.

## Claims

1. Sealing arrangement for a coupling for refrigerant lines comprising a first coupling piece which is connected sealingly to a first line end piece and a second coupling piece which is connected sealingly to a second line end piece, both coupling pieces being joined together by fastening means such that the line end pieces are connected to one another via one respective bore in the coupling pieces and the two coupling pieces have a radially extending sealing face respectively on the side facing the other coupling piece and only one single screw is provided as fastening means, arranged laterally offset from the sealing faces, a non-compressible molded body being arranged as a spacer between the coupling pieces at a distance from the screw on the side which is remote from the sealing faces of the coupling pieces, and which is configured such that when screwing together the coupling pieces a lever action is produced which results in the uniform compression of a sealing ring arranged between the sealing faces of the coupling pieces, and during which the sealing ring is held against the sealing face of one of the two coupling pieces by a holding device which is configured as a plastics cap having a through-bore and, at a first axial end of the through-bore (2), the plastics cap comprises retaining lugs (6) projecting radially into the through-bore (2), by means of which the sealing ring may be secured in its position between the sealing face of the coupling piece and the retaining lugs (6), **characterized in that** the plastics cap has at least one predetermined breaking point (8) which is configured as a groove which reduces the material thickness of the plastics cap such that the material integrity at the predetermined breaking point (8) is maintained during assembly and breaks apart during dismantling.

## Revendications

1. Agencement d'étanchéité pour un accouplement pour conduites de fluide frigorigène constitué d'un premier élément d'accouplement connecté hermétiquement à un premier embout de conduite et d'un deuxième élément d'accouplement connecté hermétiquement à un deuxième embout de conduite, les deux éléments d'accouplement étant assemblés par des moyens de fixation de telle sorte que les embouts de conduite soient connectés l'un à l'autre par le biais d'un alésage respectif dans les éléments d'accouplement et les deux éléments d'accouplement présentant à chaque fois sur le côté tourné vers l'autre élément d'accouplement une surface d'étanchéité s'étendant radialement, et seulement une vis unique, disposée de manière décalée latéralement par rapport aux surfaces d'étanchéité, étant prévue en tant que moyen de fixation, un corps moulé non compressible servant d'élément d'espacement étant disposé entre les éléments d'accouplement à distance de la vis du côté opposé aux surfaces d'étanchéité des éléments d'accouplement, lequel corps moulé est réalisé de telle sorte que lors du vissage des éléments d'accouplement, il se produise un effet de levier qui donne lieu à une compression uniforme d'une bague d'étanchéité disposée entre les surfaces d'étanchéité des éléments d'accouplement, au cours duquel la bague d'étanchéité est maintenue par un dispositif de retenue réalisé sous forme de capuchon en plastique avec un alésage traversant contre la surface d'étanchéité de l'un des deux éléments d'accouplement, et le capuchon en plastique présente à une première extrémité axiale de l'alésage traversant (2) des ergots de retenue (6) saillant radialement dans l'alésage traversant (2), par le biais desquels la bague d'étanchéité peut être fixée dans sa position entre la surface d'étanchéité de l'élément d'accouplement et les ergots de retenue (6),
**caractérisé en ce que** le capuchon en plastique présente au moins un point destiné à la rupture (8), qui est réalisé en tant que rainure réduisant l'épaisseur de matériau du capuchon en plastique, de telle sorte que la cohésion du matériau dans le point destiné à la rupture (8) soit conservée lors du montage, et qu'il se sépare par rupture lors du démontage.
